# EUROPÄISCHE PATENTSCHRIFT

(11) **EP 2 497 353 B1**
(45) Veröffentlichungstag und Bekanntmachung des Hinweises auf die Patenterteilung: **15.11.2017**
(21) Anmeldenummer: 12156483.5
(22) Anmeldetag: 22.02.2012
(51) Int. Cl.: A01D 34/73

(54) **Mähscheibe mit einem Mähmesser und einem Halter**
Mowing device with a mowing blade and a retainer
Dispositif faucheur avec une lame faucheuse et un dispositif de retenue

(30) Priorität: 08.03.2011 DE 102011005252
(43) Veröffentlichungstag der Anmeldung: 12.09.2012
(73) Patentinhaber: Deere & Company, Moline, IL 61265 (US)
(72) Erfinder: Tepe, Heinrich, 70100 Gray (FR)
(74) Vertreter: Reichert, Christian

(56) Entgegenhaltungen:
- EP-A1- 1 008 289
- DE-A1- 19 521 067
- US-A1- 2003 196 332

## Beschreibung

Die Erfindung betrifft eine Mähscheibe mit einem Mähmesser und einem Halter, der von der Mähscheibe getragen wird und geeignet ist, ein Loch in dem Mähmesser zu durchsetzen, wobei im eingebauten Zustand ein innerer Bereich des Mähmessers verdeckt ist, ein äußerer Bereich frei liegt und der Halter ein maximal zulässiges Maß an Verschleiß nicht überschreiten darf, und ein Mähmesser.

Aus der DE 195 21 067 A1 ist es bekannt, Mähmesser über einen Schnellwechselmechanismus an einer Mähscheibe zu befestigen. Bei einem solchen Schnellwechselmechanismus wird ein Halter in der Form eines Bolzens oder Zapfens in eine Wechselstellung geschwenkt, so dass er außer Eingriff mit dem Mähmesser gerät und ein neues Mähmesser eingesetzt werden kann.

Das der Erfindung zugrunde liegende Problem wird darin gesehen, dass beim Austausch des Mähmessers Verschleiß an dem Halter nicht oder nur sehr schwer erkannt werden kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird beim Einsetzen eines neuen Mähmessers die formhafte Gestaltung auf dem inneren Bereich sichtbar, wenn an dem Halter ein unzulässiger Verschleiß aufgetreten ist. Diese Folge dient als Hinweis, auch den Halter auszutauschen. Bei der formhaften Gestaltung kann es sich um alles handeln, was auch unter dem rauen und schmutzbehafteten Betrieb eines landwirtschaftlichen Geräts noch erkennbar ist, also insbesondere eine Kerbe, eine Rille, eine Öffnung, ein Absatz, Einprägungen, Aufschweißungen, Ätzungen, aufgeklebte, aufgeschweißte, aufgelötete, aufgeschrumpfte widerstandsfähige erhabene Elemente, etc.. Diese Gestaltungen können ein oder mehrstufig sein und somit verschiedenen Verschleißgraden entsprechen. Die Erfindung könnte auch analog verwendet werden, wenn das Loch nicht in dem Mähmesser, sondern in der Mähscheibe und der Halter nicht in der Abdeckung oder einem Sicherungselement sondern auf dem Mähmesser befestigt wäre.

Die Mähscheibe enthält eine Abdeckung und ein Sicherungselement, die gemeinsam miteinander rotieren, aber voneinander getrennt werden können und zueinander relativ beweglich sind. Der Halter zum Festlegen des Mähmessers kann an jedem der beiden befestigt sein, wobei es wichtig ist, dass diese voneinander weg bewegt werden können, um ein Mähmesser einsetzen oder entnehmen zu können.

Wenn auch der innere Bereich von einer sonstigen Abdeckung (Mähgehäuse, Messerhalter, Deflektor, etc.) bedeckt sein könnte, ist es doch sinnvoll, wenn er von einer Abdeckung der Mähscheibe bedeckt ist, weil diese sich stets mit dreht und die Abdeckung zum Erkennen des Verschleißes nicht in eine bestimmte Stellung gebracht werden muss, in der die Lage der formhaften Gestaltung ermittelt werden muss.

Wenn die formhafte Gestaltung derart gewählt ist, dass sie eine Schulter oder dergleichen bildet, die bei Erreichen der Verschleißgrenze an dem Außenumfang der Mähscheibe anlegbar ist, wird das Mähmesser immobil und somit von einer weiteren Verschleiß verursachenden Pendelbewegung an der Mähscheibe abgehalten. Eine solche Arretierung wird auch sofort erkannt.

Mähmesser können in verschiedenen Weisen (rechteckig, dreiseitig, beidseitig Klingen aufweisend, etc.) ausgebildet und an unterschiedlichen Mähgeräten mit horizontalem oder vertikalem Mähbalken verwendet werden.

In der Zeichnung ist ein nachfolgend näher beschriebenes Ausführungsbeispiel der Erfindung dargestellt. Es zeigt:
- Fig. 1: eine Mähmaschine in schematischer Darstellung in Seitenansicht, in der eine Mähscheibe mit einem Mähmesser sichtbar ist,
- Fig. 2: ein Schnittdarstellung eines Mähmessers festgemacht an einer Mähscheibe in einem Nichtverschleißzustand,
- Fig. 3: die Darstellung nach Figur 2 in einem Verschleißzustand,
- Fig. 4: ein Mähmesser mit einer formhaften Gestaltung in Draufsicht, und
- Fig. 5: eine perspektivische Ansicht der Mähscheibe mit dem Mähmesser und der formhaften Gestaltung.

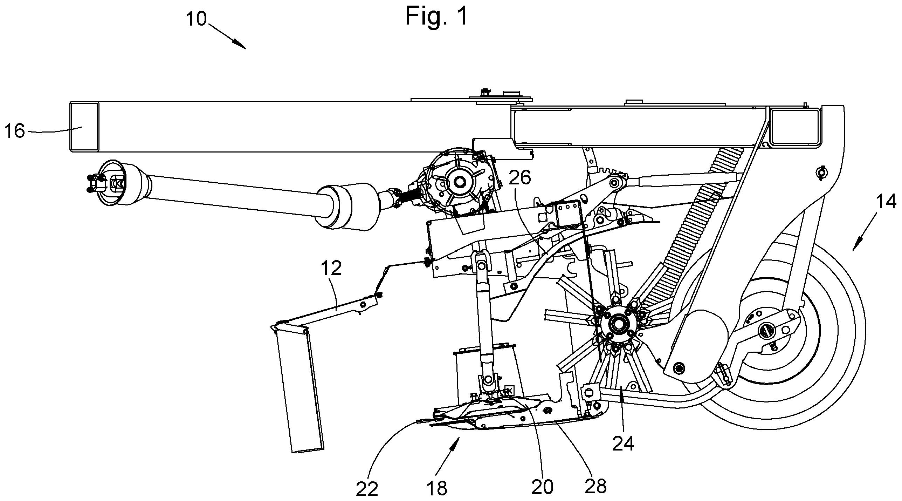

In Figur 1 ist eine Mähmaschine 10 zu erkennen, mit einem Gehäuse 12, einem Fahrgestell 14, einer Deichsel 16, einem Mähbalken 18 mit Mähscheiben 20 und Mähmessern 22, einer Gutbearbeitungsvorrichtung 24 und einer Gutleitvorrichtung 26.

Die Mähmaschine 10 ist in diesem Fall in einer gezogenen Ausführung dargestellt; dies ist belanglos, weil es nur auf Mähscheiben 20 und die daran befestigten Mähmesser 22 ankommt; statt dessen kann die Mähmaschine 10 auch an eine Gerätekupplung angebaut oder selbstfahrend ausgebildet sein. Eine solche Mähmaschine 10 wird vorwiegend in der Landwirtschaft eingesetzt, um Gras in Bodennähe zu mähen.

Das Gehäuse 12 deckt das Mähwerk 18 nach oben und seitlich ab, so dass niemand irrtümlich in die Nähe des Mähbalkens 18 gelangen und auch kein Mähgut weggeschleudert werden kann.

Das Fahrgestell 14 enthält zwei seitlich zueinander beabstandete Räder und ein Chassis, an das die Räder, wie auch das Gehäuse 12 vertikal beweglich angeschlossen ist.

Die Deichsel 16 erstreckt sich von dem Fahrgestell 14 aus nach vorne und dient dazu, die Mähmaschine 10 mit einem Zugfahrzeug, z. B. einem Ackerschlepper zu verbinden.

Das Mähwerk 18 erstreckt sich quer zu der Fahrtrichtung der Mähmaschine 10 und über deren gesamte Breite. Die Unterseite des Mähwerks 18 wird von einem Mähbalken 28 in der Form eines Getriebegehäuses gebildet, in dem um im wesentlichen vertikale Achsen drehbar die Mähscheiben 20 antreibbar gelagert sind.

Die Mähscheiben 20 sind in Draufsicht im Wesentlichen oval, dreiecksförmig oder rund ausgebildet und an den schmalen Endbereichen, in den Eckbereichen oder auf dem Umfangskreis gleichmäßig verteilt jeweils mit einem Halter 30 jeweils zur Aufnahme eines Mähmessers 22 versehen. Die Mähscheiben 20 rotieren mit einem geringen Abstand oberhalb des Mähbalkens 28. Die Mähscheiben 20 enthalten eine Abdeckung 52 und ein Sicherungselement 32. Das Sicherungselement 32 ist unterhalb der Abdeckung 52 vorgesehen und mit dieser drehfest verbunden. Das Sicherungselement 32 ist in diesem Ausführungsbeispiel als eine Blattfeder ausgebildet und erstreckt sich bis unterhalb des Halters 30. Die Mähscheiben 20 werden im Betriebszustand mit ca. 2000 U/Min angetrieben und sind unter anderem Erdreich, Steinen, Fremdkörpern usw. ausgesetzt, die in den Bereich des Halters 30 gelangen und diesen verschleißen.

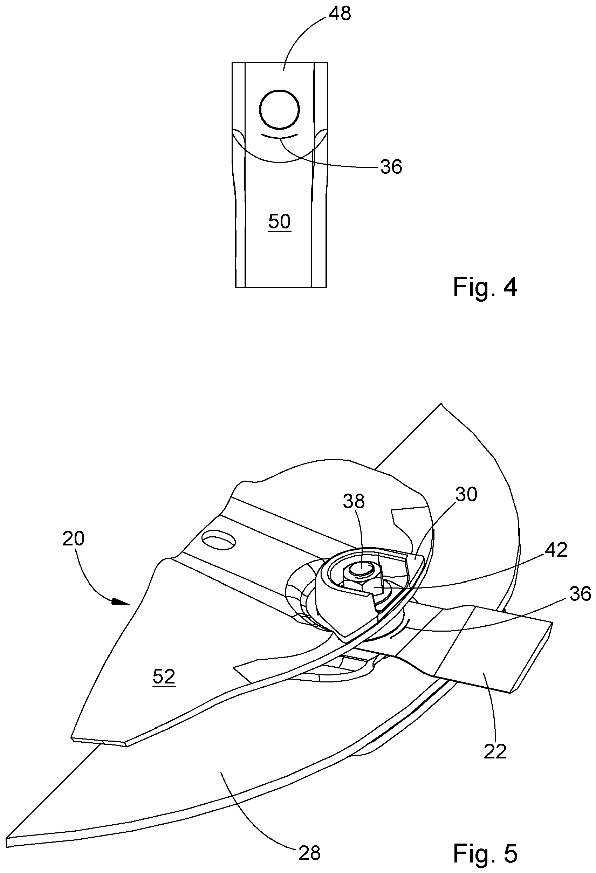

Die Mähmesser 22 sind in diesem Ausführungsbeispiel in Draufsicht gesehen rechteckförmig ausgebildet, sh. Fig. 4, und aus Stahl geschmiedet; sie können eben, in sich tordiert, gekröpft, gebogen oder sonstwie gestaltet sein, um hervorragende Verschleiß- und Gutleiteigenschaften zu erreichen. Die Mähmesser 22 sind in einem radial inneren Bereich 48 mit einem zumeist runden Loch 34 und in einem gegenüberliegenden äußeren Bereich 50 an der Oberseite mit einer formhaften Gestaltung 36 versehen. Die dem Halter 30 zugelegene Seite der formhaften Gestaltung 36 weist zu der ihr abgelegenen Innenkante des Lochs 34 den Abstand "X" auf.

Die Gutbearbeitungsvorrichtung 24 ist in diesem Fall als ein Zinkenrotor ausgebildet, der das Mähgut von dem Mähwerk 18 annimmt und es überkopf nach hinten, d.h. mit Blick auf Figur 1 nach rechts fördert. Weder muss eine solche Gutbearbeitungsvorrichtung 24 vorgesehen, noch als ein Zinkenrotor ausgebildet sein.

Die Gutleitvorrichtung 26 ist als eine gebogene Blechhaube ausgebildet, die das Mähgut auf einem Teil eines Kreisbogens führt.

Der Halter 30 enthält einen Zapfen 38, Schraube, Bolzen, Vorsprung oder dergleichen dessen oberer Endbereich 40 im eingebauten Zustand mittels einer Mutter 42 in der Abdeckung 52 befestigt ist, und dessen unterer Endbereich mit einem Kopf 44 versehen ist, der gegenüber dem Rest des Zapfens 38 breiter ausgebildet ist. Der Kopf 44 ragt nach unten bis in eine Aussparung 46 in dem Sicherungselement 32 und ist beträchtlich länger als das Mähmesser 22 dick ist. Der Kopf 44 ist so dimensioniert, dass er mit wenig Spiel in das Loch 34 in dem Mähmesser 22 passt. Der Halter 30 könnte auch in dem Sicherungselement 32 befestigt sein und würde dann in eine Aussparung 46 in der Abdeckung 52 reichen.

Das Sicherungselement 32 ist mit der Aussparung 46 versehen, in der der Kopf 44 mit möglichst wenig Spiel aufgenommen wird. Das Sicherungselement 32 wird aufgrund interner oder externer Federkraft zu dem Halter 30 gedrängt, so dass es zum einen den Kopf 44 sicher aufnimmt und zum anderen das Mähmesser 22 zwischen sich und dem Halter 30 bzw. der Unterseite der Abdeckung 20 sichert. Das Sicherungselement 32 kann mittels eines nicht gezeigten Hebels von der Abdeckung 52 gegen die Federkraft weggedrückt werden, so dass der Kopf 44 freigegeben wird und ein Spalt zwischen der Endfläche des Kopfes 44 und dem Sicherungselement 32 bzw. der Abdeckung 52 entsteht, durch den ein Mähmesser 22 ein- oder ausgebaut werden kann.

Im eingebauten Zustand des Mähmessers 22 erstrecken sich das Loch 34, der Kopf 44 und die Aussparung 46 konzentrisch um eine Achse, die zugleich die Schwenkachse des Mähmessers 22 bildet.

Die formhafte Gestaltung 36 ist in diesem Fall als eine in die Oberseite des Mähmessers 22 eingeprägte Kerbe ausgebildet, die dauerhaft sichtbar ist; wie eingangs beschrieben, kann die formhafte Gestaltung 36 auch vollkommen anders ausgeführt und auch an der Unterseite oder seitlich vorgesehen sein, wenn dies zweckdienlicher ist.

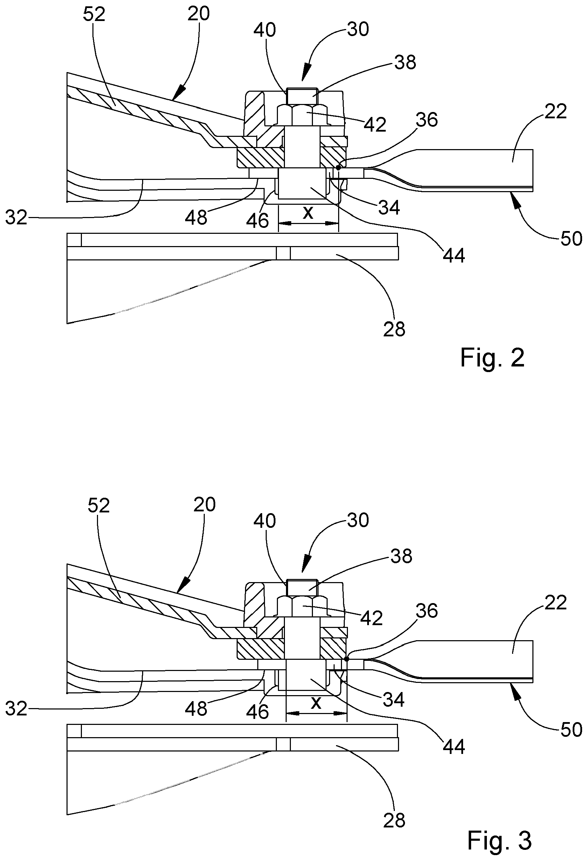

Ausgehend von der vorherigen Beschreibung ergibt sich folgender Aufbau und folgende Funktion:
Zum Einbau eines Mähmessers 22 wird das Sicherungselement 32 nach unten von der Abdeckung 52 weggedrückt und ein Mähmesser 22 durch den dann entstandenen Spalt zwischen der Unterseite des Kopfes 44 und der Oberseite des Sicherungselements 32 so eingeführt, dass das Loch 34 in ihm in Deckung mit dem Kopf 44 gerät. Dann wir das Sicherungselement 32 losgelassen, und es bewegt sich unter der Wirkung der Feder auf die Abdeckung 52 zu, um dann den Kopf 44 in der Aussparung 46 aufzunehmen; dadurch ist das Mähmesser 22 an dem bzw. um den Halter 30 gesichert. Nach dem Einbau wird das Mähmesser 22 radial von der Drehachse der Mähscheibe 20 weg gezogen. Sollte in der Endstellung des Mähmessers 22 die formhafte Gestaltung 36 sichtbar werden - sh. Fig. 3 -, liegt an der in Figur 3 linken Seite des Zapfens 38 Verschleiß an ihm vor, der dazu zwingt, auch den Halter 30 zu ersetzen.

## Patentansprüche

1. Mähscheibe (20) mit einem Mähmesser (22) und einem Halter (30), der von der Mähscheibe (20) getragen wird und geeignet ist, ein Loch (34) in dem Mähmesser (22) zu durchsetzen, wobei im eingebauten Zustand ein innerer Bereich (48) des Mähmessers (22) verdeckt ist, ein äußerer Bereich (50) frei liegt und der Halter (30) ein maximal zulässiges Maß an Verschleiß nicht überschreiten darf, **gekennzeichnet durch** eine formhafte Gestaltung (36) des Mähmessers (22) angrenzend an den äußeren Bereich (50) in einem Abstand X zu dem Loch (34), der dem maximal zulässigen Verschleiß des Halters (30) zugeordnet ist, sodass die formhafte Gestaltung (36) verdeckt bleibt, solange der Halter (30) noch nicht den maximalem Verschleiß erfahren hat, aber sichtbar wird, wenn der Halter (30) den maximalem Verschleiß aufweist.

2. Mähscheibe nach Anspruch 1, **dadurch gekennzeichnet, dass** sie eine Abdeckung (52) und ein Sicherungselement (32) aufweist, wobei der Halter (30) an der Abdeckung (52) oder an dem Sicherungselement (32) angebracht ist.

3. Mähscheibe nach Anspruch 1 oder 2, **dadurch gekennzeichnet, dass** die formhafte Gestaltung (36) derart gewählt ist, dass diese eine Schulter bildet, die bei Erreichen des maximal zulässigen Maßes an Verschleiß an einem Außenumfang der Mähscheibe anlegbar ist, so dass sie einen Einsatz des Mähmessers (22) in die Mähscheibe (20) nicht mehr zulässt oder das Mähmesser (22) festsetzt, wenn ein bestimmter Verschleiß bereits überschritten ist.

4. Mähscheibe nach einem oder mehreren der vorherigen Ansprüche, **dadurch gekennzeichnet, dass** sich der innere Bereich (48) des Mähmessers (22) unterhalb einer Abdeckung (52) der Mähscheibe (20) erstreckt und von dieser verdeckt ist.

## Claims

1. Mowing cutter disc (20) having a mowing blade (22) and a holder (30), the latter being supported by the mowing cutter disc (20) and being suitable for passing through a hole (34) in the mowing blade (22), wherein in the installed condition an inner region (48) of the mowing blade (22) is hidden, an outer region (50) is exposed and the holder (30) may not exceed a maximum permissible amount of wear, **characterized by** a shaped feature (36) of the mowing blade (22) adjoining the outer region (50) at a spacing X from the hole (34) which is associated with the maximum permissible amount of wear of the holder (30) such that the shaped feature (36) remains hidden while the holder (30) has not yet undergone the maximum amount of wear but becomes visible when the holder (30) has undergone the maximum amount of wear.

2. Mowing cutter disc according to Claim 1, **characterized in that** it includes a cover (52) and a securing element (32), wherein the holder (30) is secured to the cover (52) or to the securing element (32).

3. Mowing cutter disc according to Claim 1 or 2, **characterized in that** the shaped feature (36) is selected such that it forms a shoulder which may come into abutment against an outer periphery of the mowing cutter disc when the maximum permissible amount of wear is reached, so that it no longer allows the mowing blade (22) to be inserted into the mowing cutter disc (20) or the mowing blade (22) is immobilized once a certain amount of wear has been exceeded.

4. Mowing cutter disc according to one or more of the preceding claims, **characterized in that** the inner region (48) of the mowing blade (22) extends under a cover (52) of the mowing cutter disc (20) and is hidden thereby.

## Revendications

1. Disque de coupe (20) avec une lame de coupe (22) et un support (30) porté par le disque de coupe (20) et adapté pour traverser un trou (34) dans la lame de coupe (22), dans lequel, dans l'état monté, une région intérieure (48) de la lame de coupe (22) est couverte, une région extérieure (50) est dégagée et le support (30) ne peut dépasser un degré d'usure maximale admissible, **caractérisé par** une configuration structurée (36) de la lame de coupe (22) à côté de la région extérieure (50) à une distance X du trou (34), laquelle correspond au degré d'usure maximale admissible du support (30), de telle façon que la configuration structurée (36) demeure couverte dans la mesure où le support (30) n'a pas encore atteint le degré d'usure maximale admissible mais devient visible, lorsque le support (30) présente le degré d'usure maximale.

2. Disque de coupe selon la revendication 1, **caractérisé en ce que** celui-ci présente un cache (52) et un élément de sécurité (32), le support (30) étant fixé au cache (52) ou à l'élément de sécurité (32).

3. Disque de coupe selon la revendication 1 ou 2, **caractérisé en ce que** la configuration structurée (36) est choisie de manière à former un épaulement apte à s'appliquer sur un pourtour extérieur du disque de coupe lors de l'atteinte du degré d'usure maximale admissible, de manière à ne plus permettre d'intervention de la lame de coupe (22) dans le disque de coupe (20) ou à fixer la lame de coupe (22) lorsqu'un certain degré d'usure est dépassé.

4. Disque de coupe selon l'une ou plusieurs des revendications précédentes, **caractérisé en ce que** la région intérieure (48) de la lame de coupe (22) s'étend en dessous d'un cache (52) du disque de coupe (20) tout en étant couverte par celui-ci.
